# EUROPÄISCHE PATENTANMELDUNG

(11) **EP 0 806 660 A1**
(43) Veröffentlichungstag der Anmeldung: **12.11.1997**
(21) Anmeldenummer: 97107301.0
(22) Anmeldetag: 02.05.1997
(51) Int. Cl.: G01N 29/26, G01N 17/00

(54) **Einrichtung und Verfahren zur Überwachung von Korrosion auf einer Mantelfläche von Lichtmasten**

(30) Priorität: 05.05.1996 DE 19617789
(71) Anmelder: Thom, Roland, 71522 Backnang (DE)
(72) Erfinder: Thom, Roland, 71522 Backnang (DE)
(74) Vertreter: Ostertag, Ulrich

(57) **Zusammenfassung**

Eine Einrichtung (202) zur Überwachung der Korrosion auf einer Mantelfläche von Lichtmasten mittels Messung der lokalen Wanddicke, insbesondere im Bereich des Mastfußes, umfaßt u.a. eine Festlegevorrichtung (206), eine Sensoreinheit (204) und eine Bewegungsvorrichtung (208) für die Sensoreinheit (204). Die Festlegevorrichtung (206) legt die Überwachungseinrichtung (202) am Mastrohr (268) fest. Die Bewegungsvorrichtung (208) bewirkt eine translatorische bzw. rotatorische Bewegung der Sensoreinheit (204). Die Sensoreinheit (204) umfaßt Bewegungsmittel (262) und Ultraschall-Sensoren (264). Zusätzlich können Reingungsvorrichtungen (282,284) für die Meßstelle vorhanden sein.

## Beschreibung

Die Erfindung betrifft eine Einrichtung und ein Verfahren zur Überwachung von Korrosion auf einer Mantelfläche von Lichtmasten gemäß den Oberbegriffen der Ansprüche 1 und 15.

Lichtmasten z.B. für die Beleuchtung von Straßen bestehen üblicherweise aus einem metallischen Rohr, welches einen unterhalb der Erdoberfläche und einen oberhalb der Erdoberfläche liegenden Abschnitt aufweist. Der aus der Erde herausragende Abschnitt weist üblicherweise eine verschließbare Öffnung auf, durch welche Verkabelungs-, Schaltungs- und Wartungsarbeiten durchgeführt werden können. Dieser aus der Erde herausragende Abschnitt kann z.B. an seinem oberen Ende gekrümmt ausgeführt sein, wobei an diesem oberen gekrümmten Abschnitt die Leuchtmittel befestigt sind. Der in der Erde liegende Abschnitt des Lichtmastes dient der Befestigung und ist zu diesem Zweck ausreichend tief eingegraben oder/und durch ein Fundament zusätzlich gesichert.

Untersuchungen haben ergeben, daß insbesondere der in der Erde liegende Abschnitt des Mastrohres Korrosionseinflüssen ausgesetzt ist. Es wurde festgestellt, daß diese Korrosion in einer Tiefe von ca. 10 bis 40 cm unterhalb der Erdoberfläche ein Maximum erreichen kann. Im Laufe der Zeit kann diese Korrosion soweit fortschreiten, daß die Standfestigkeit des Rohrmastes signifikant beeinträchtigt ist.

Aus diesem Grund werden die in der Erde liegenden Abschnitte von Lichtmasten in regelmäßigen Zeitabständen inspiziert. Dies geschieht üblicherweise dadurch, daß die Erde im Bereich des Mastfußes bis in eine Tiefe von ca. 40 cm aufgegraben wird und z.B. von außen eine Sichtinspektion durchgeführt wird. Im Bedarfsfalle wird nach dieser Prüfung der Mastfuß mittels geeigneter Techniken saniert und anschließend wieder mit Erde zugedeckt.

Es liegt auf der Hand, daß bei der enormen Anzahl von Lichtmasten, welche z.B. an öffentlichen Straßen und Plätzen vorhanden sind, diese Art der Überwachung einen großen Zeit- und Kostenaufwand verursacht. Aus diesem Grund werden bisweilen auch nur stichprobenartige Inspektionen durchgeführt. Wegen der lokalen Unterschiedlichkeit der Korrosionsbedingungen, welche z.B. von der lokalen Bodenfeuchtigkeit und der lokalen Bodenbeschaffenheit abhängen, birgt eine stichprobenartige Inspektion jedoch das erhebliche Risiko, daß fortgeschrittene Korrosionsschäden und die daraus resultierende eingeschränkte Standfestigkeit von Lichtmasten nicht rechtzeitig erkannt werden.

Eine bekannte Überwachungsmethode der eingangs genannten Art beinhaltet die Verwendung eines Endoskops, welches durch die Öffnung einer Wartungstüre in das Innere des Mastes eingeschoben wird. Nachteilig ist hierbei allerdings, daß Korrosionsschäden im Außenbereich des Mastfußes - und dort treten sie üblicherweise am häufigsten auf - nicht erkannt werden können, und daß keine quantitative Bestimmung des Korrosionsfortschritts möglich ist.

Der vorliegenden Erfindung liegt daher die Aufgabe zugrunde, eine Einrichtung zur Überwachung der Korrosion auf einer Mantelfläche von Lichtmasten der eingangs genannten Art so weiterzubilden, daß eine schnelle, einfache, sichere und kostengünstige Überwachung, d.h. Entdeckung und quantitative Bewertung von Korrosionsschäden auch der Außenwand des in der Erde liegenden Abschnittes von Lichtmasten ermöglicht wird.

Diese Aufgabe wird erfindungsgemäß gelöst durch eine Überwachungseinrichtung mit den im Anspruch 1 gegebenen Merkmalen.

Die Erfindung macht sich die Tatsache zu nutze, daß die Korrosion eines Lichtmastes zu einer Verringerung der effektiven Wandstärke im korrodierten Bereich führt. Diese Verringerung der Wandstärke kann auch von innen mittels geeigneter Techniken (z.B. Ultraschall, Thermographie, etc.) gemessen werden.

Die erfindungsgemäße Überwachungseinrichtung ist so ausgeführt, daß sie durch die Öffnung der Wartungstüre im Lichtmasten in das Innere des Lichtmastes eingebracht werden kann. Sie umfaßt in erster Linie eine Vorrichtung zum Festlegen der Überwachungseinrichtung in einer gewünschten Position im Lichtmast, eine Sensoreinheit zur Erfassung eines der lokalen Wandstärke des Lichtmastes entsprechenden Signals und eine fernbedienbare Bewegungsvorrichtung für diese Sensoreinheit.

Ein bevorzugtes Ausführungsbeispiel umfaßt eine als fernbedienbare Spannvorrichtung ausgebildete Festlegevorrichtung, welche sich nach dem Einbringen der Überwachungseinrichtung in das Innere des Lichtmastes radial nach außen verspreizt und so die Überwachungseinrichtung mit der Innenwand des Lichtmastes verklemmt.

Ein andere Weiterbildung einer erfindungsgemäßen Überwachungseinrichtung ist durch eine Festlegevorrichtung gekennzeichnet, die als schraubzwingenartiger Befestigungswinkel ausgebildet ist. Diese Vorrichtung ist besonders robust, einfach herzustellen und leicht zu warten.

Bei einem weiteren Ausführungsbeispiel ist an der Festlegevorrichtung eine fernbedienbare Bewegungsvorrichtung befestigt, welche z.B. über eine Welle die Sensoreinheit trägt. Über diese Bewegungsvorrichtung ist die Sensoreinheit in eine beliebige Position in axialer Richtung zu verschieben.

Eine andere Weiterbildung weist eine Bewegungsvorrichtung auf, welche es ermöglicht, die Sensoreinheit um die Längsachse der Vorrichtung zu verdrehen.

Schließlich ist eine Weiterbildung aufgeführt, bei der es geeignete Bewegungsmittel an der Sensoreinheit ermöglichen, den Sensor für den Meßvorgang in radialer Richtung auszufahren und/oder in Anlage zur Innenwand des Lichtmastes zu bringen.

Bei einer vorteilhaften Ausgestaltung der Erfindung wird die Messung der Wandstärke mit mindestens einem UltraschallSensor durchgeführt.

Nach einem Merkmal der Erfindung kann dieser Ultraschall-Sensor "trocken" betrieben werden. Dies bedeutet, daß er an seiner der Meßstelle zugewandten Oberfläche eine Silikonauflage aufweist, welche zur Herstellung eines vollflächigen Kontaktes und zur Übermittlung der Ultraschallsignale dient.

Bei einer anderen Ausgestaltung der Erfindung ist vorgesehen, eine Wasserschicht zwischen Ultraschall-Sensor und Meßstelle herzustellen. Somit kann der Ultraschall-Sensor bei diesem Ausführungsbeispiel "naß" betrieben werden.

Auch kann der Ultraschall-Sensor mit Adapterstücken, welche an seiner der Meßstelle zugewandten Seite aufgebracht werden können, an unterschiedliche Innenradien von Lichtmasten angepaßt werden. Dies ist insbesondere bei konisch ausgeführten Lichtmasten von Vorteil.

Eine besonders vorteilhafte Ausgestaltung der Bewegungsvorrichtung umfaßt für den Antrieb mindestens einen Schrittmotor. Hierdurch wird ein einfaches und äußerst positionsgenaues Verfahren bzw. Verdrehen der Sensoreinheit ermöglicht.

Da aufgrund des Mikroklimas innerhalb des Mastfußes an der Innenwand des Lichtmastes Verunreinigungen (Korrosion, Moos, Insekten) vorhanden sein können, welche die Meßgenauigkeit beeinträchtigen können, umfaßt eine weitere Ausgestaltung der Erfindung eine Reinigungsvorrichtung, welche die Meßstelle vor der Messung reinigt. Dies kann z.B. durch Bespritzen der vorgesehenen Meßstelle mit einem Hochdruckwasserstrahl und/oder durch Behandlung der Meßstelle mit einer Bürstvorrichtung erreicht werden.

Eine besonders einfache Ausgestaltung einer erfindungsgemäßen Überwachungseinrichtung umfaßt eine Festlegevorrichtung, welche als Ringschlauch ausgeführt ist, welcher nach dem Einführen der Überwachungseinrichtung durch die Wartungsöffnung und dem Verbringen der Überwachungseinrichtung in die gewünschte Position aufblasbar ist und auf diese Weise die Überwachungseinrichtung mit der Innenwand des Lichtmastes verspannt.

Bei sehr tief eingegrabenen Masten oder/und bei sehr großen zu erwartenden Korrosionsflächen ist eine Ausgestaltung der Überwachungseinrichtung vorteilhaft, bei welcher die Festlegevorrichtung und mit ihr die gesamte Überwachungseinrichtung z.B. über Räder oder Raupen in axialer Richtung des Mastes fernsteuerbar verfahrbar ist.

Weiterhin hat die Erfindung zur Aufgabe, ein Verfahren zur Überwachung der Korrosion an einer Mantelfläche von Lichtmasten bereitzustellen, welches schnell, sicher und preiswert durchzuführen ist.

Diese Aufgabe wird mit dem Verfahren nach Anspruch 15 gelöst.

Nachstehend wird die Erfindung anhand von Ausführungsbeispielen unter Bezugnahme auf die Zeichnungen näher erläutert. In dieser zeigen:
- Figur 1:: eine Seitenansicht einer Spannvorrichtung für eine Überwachungseinrichtung mit 2 x 3 Spannbacken in gelöster Position;
- Figur 2:: eine Draufsicht auf die Spannvorrichtung von Figur 1;
- Figur 3:: einen teilweisen Längsschnitt durch einen Lichtmast mit einem ersten Ausführungsbeispiel einer Überwachungseinrichtung mit einer im Lichtmast verspreizten Spannvorrichtung mit 2 x 4 Spannbacken;
- Figur 4:: einen teilweisen Längsschnitt durch einen Lichtmast mit einem zweiten Ausführungsbeispiel einer Überwachungseinrichtung mit einer im Lichtmast verspreizten Spannvorrichtung mit 2 x 4 Spannbacken und einer Reinigungs- und Hochdruck-Wasserstrahlvorrichtung;
- Figur 5:: eine perspektivische Darstellung eines Lichtmastes mit einer darin eingebrachten Überwachungseinrichtung nach Figur 3 oder 4 und einer damit verbundenen Betriebseinheit; und
- Figur 6:: einen teilweisen Längsschnitt durch einen Lichtmast mit einem dritten Ausführungsbeispiel einer Überwachungseinrichtung mit einer manuellen Klemmvorrichtung.

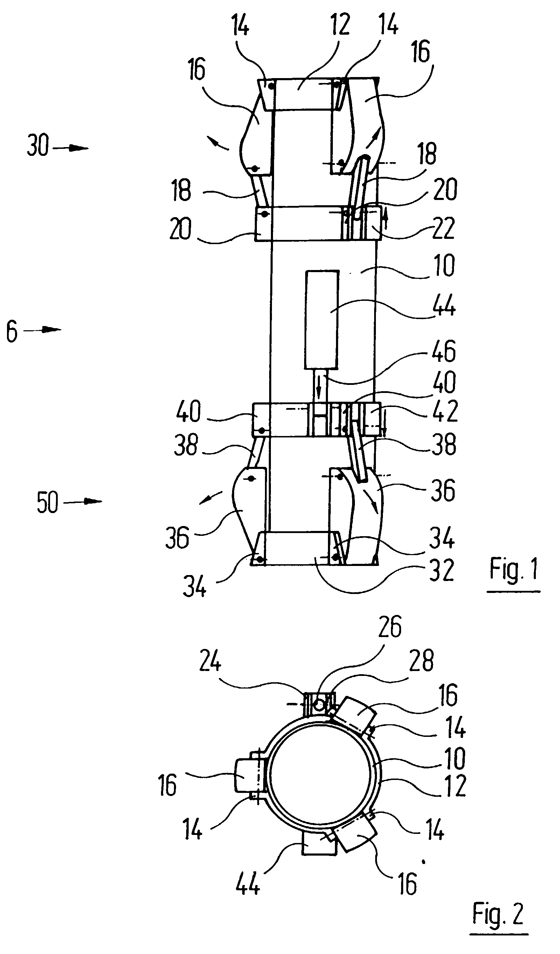

In den Figuren 1 und 2 ist zunächst nur ein Teil einer Überwachungseinrichtung dargestellt, nämlich eine Spannvorrichtung 6, welche ein Zentralrohr 10, eine obere Spanneinheit 30 und eine untere Spanneinheit 50 umfaßt.

Die untere Spanneinheit 30 ist im unteren Bereich des Zentralrohrs 10 angeordnet und folgendermaßen aufgebaut: Am Zentralrohr 10 ist ein unterer Klemmring 32 angebracht, welcher drei gleichmäßig in Umfangsrichtung verteilte Gelenklaschen 34 aufweist. In diese Gelenklaschen 34 sind jeweils drei untere Spannbacken 36 gelenkig gelagert, welche an ihrem dem unteren Klemmring 32 entgegengesetzten Ende jeweils gelenkig mit Pleueln 38 verbunden sind, welche wiederum an ihren den unteren Spannbacken 36 entgegengesetzten Enden in Gelenklaschen 40 gelagert sind, welche gleichmäßig in Umfangsrichtung verteilt auf einem unteren Gleitring 42 angeordnet sind. Der untere Gleitring 42 ist gleitend verschieblich auf dem Zentralrohr 10 aufgeschoben. Über eine Gelenklasche 48 und eine Kolbenstange 46 ist der Gleitring 42 mit einem Pneumatikzylinder 44 verbunden, welcher fest mit dem Zentralrohr 10 verbunden ist.

Die obere Spanneinheit 30 ist im oberen Bereich des Zentralrohres 10 angeordnet und ist folgendermaßen aufgebaut: Auf dem Zentralrohr 10 ist ein oberer Klemmring 12 mit drei Gelenklaschen 14 angebracht, wobei die Gelenklaschen 14 in einem Winkel von 120^{o} über den Umfang versetzt zueinander angeordnet sind. In jeder der Gelenklaschen 14 ist jeweils ein oberer Spannbacken 16 gelenkig gelagert. Die oberen Spannbacken 16 sind, ebenso wie die vorgenannten unteren Spannbacken 36, vorzugsweise mit einer nach außen gekrümmten und/oder gummierten Oberfläche versehen. An ihren den Gelenklaschen 14 entgegengesetzten Enden sind die oberen Spannbacken 16 jeweils mit Pleueln 18 verbunden, welche wiederum an ihren den oberen Spannbacken 16 entgegengesetzten Enden jeweils in Gelenklaschen 20 eines oberen Gleitrings 22 gelenkig gelagert sind. Die Gelenklaschen 20 sind um den Umfang des oberen Gleitrings 22 in Winkeln von 120^{o} verteilt. Der obere Gleitring 22 ist auf das Zentralrohr 10 gleitend aufgeschoben. Ein am Zentralrohr 10 befestigter Pneumatikzylinder 24 (in Figur 1 nicht sichtbar) ist über eine Kolbenstange 26 und eine Gelenklasche 28 mit dem oberen Gleitring 22 verbunden.

Die oberen und unteren Gleitringe 24 und 44 sind vorzugsweise mit einer reibungsarmen Innenfläche ausgeführt.

In Figur 2 ist die Spannvorrichtung 6 in der Draufsicht dargestellt.

Im folgenden wird die Funktionsweise der Spannvorrichtung 6 erklärt:

In den Figuren 1 und 2 ist die Spannvorrichtung 6 im gelösten Zustand dargestellt. Das heißt, daß die Kolbenstangen 26 und 46 der Pneumatikzylinder 24 und 44 eingefahren sind. Dies hat zur Folge, daß sich der obere Gleitring 22 und der untere Gleitring 42 jeweils in einer von den jeweiligen Enden des Zentralrohrs 10 maximal entfernten Position befinden, und hierdurch die Innenseiten der oberen Spannbacken 16 und der unteren Spannbacken 36 möglichst nahe am Zentralrohr 10 liegen.

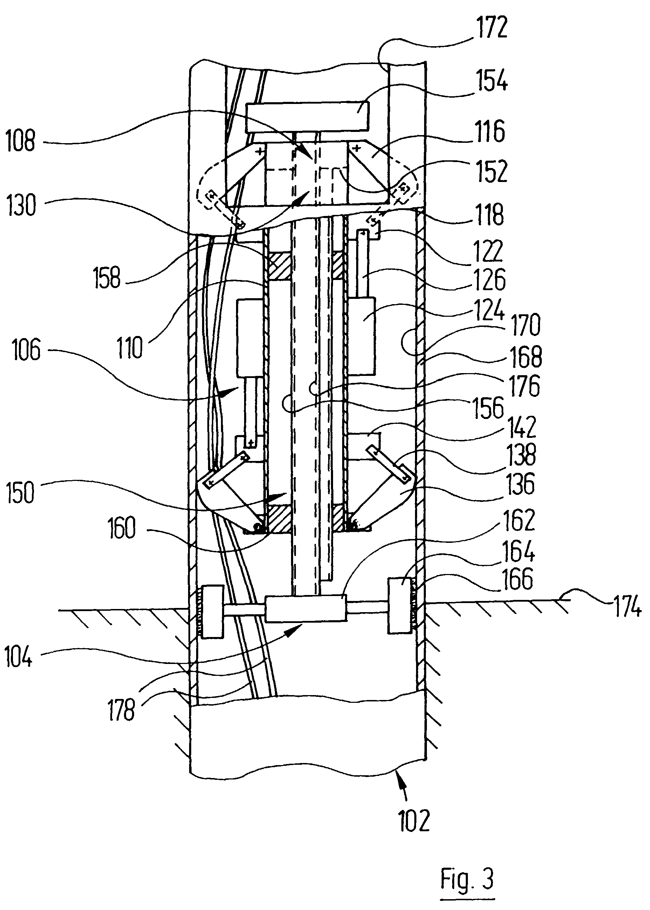

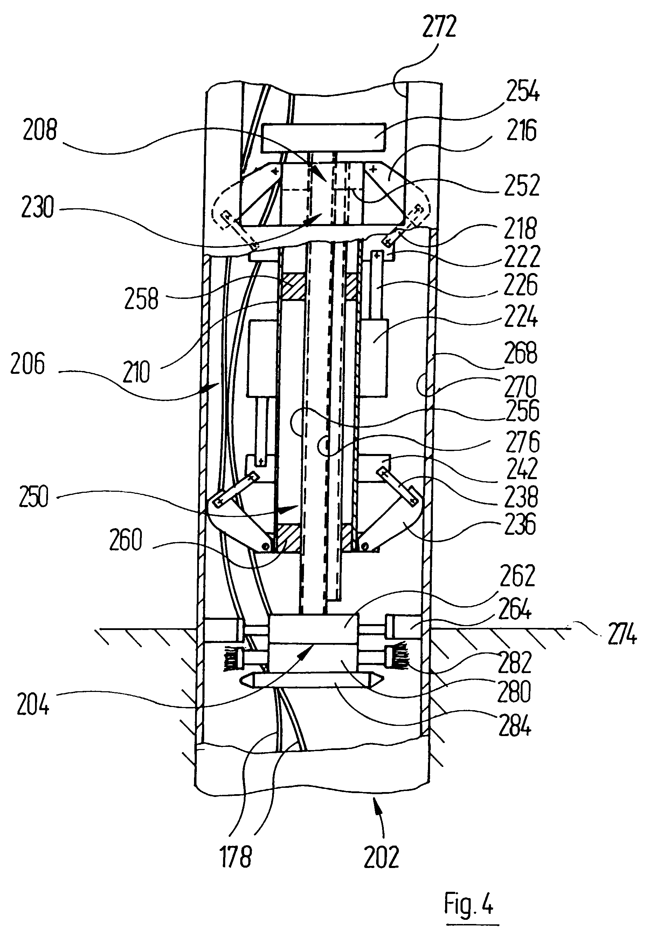

Zum Verspannen werden die Kolbenstangen 26 und 46 der Pneumatikzylinder 24 und 44 entsprechend den in der Zeichnung dargestellten Pfeilen ausgefahren und bewirken eine Verschiebung des oberen Gleitrings 22 und des unteren Gleitrings 42 jeweils in Richtung auf die Enden des Zentralrohrs 10 zu. Aufgrund der exzentrischen Position der Anschlußpunkte der Pleuel 18 und 38 werden die oberen und unteren Spannbacken 16 und 36 in Pfeilrichtung nach außen um die Gelenke 14 und 34 geschwenkt, bis sie in Anlage an die Innenwand eines Lichtmastes (in Fig. 1 und 2 nicht dargestellt) kommen (vgl. Fig. 3 und 4).

Statt zwei Pneumatikzylindern 24 und 44 jeweils bei der oberen Spanneinheit 30 und bei der unteren Spanneinheit 50 kann auch nur ein doppeltwirkender Pneumatikzylinder eingesetzt werden, welcher jeweils mit den beiden Gleitringen 22 und 42 verbunden ist.

An den Spannbacken 16 und 36 kann außerdem eine Bewegungsvorrichtung in Form von angetriebenen Rädern oder Raupen (nicht dargestellt) vorhanden sein, um eine gesteuerte Vorwärts- oder Rückwärtsbewegung der verspannten Vorrichtung 6 im Mast zu ermöglichen.

Schließlich sei an dieser Stelle noch auf eine nicht dargestellte Variante einer Spannvorrichtung verwiesen. Diese weist statt der oben beschriebenen Spannbacken, welche über Pneumtikzylinder bewegt werden, mindestens einen um daß Zentralrohr 10 befestigten ringförmigen Luftsack auf. Zum Einführen der Vorrichtung in das Innere eines Mastes ist der Luftsack leer oder/und wird vorzugsweise durch eine Vakuumpumpe so leergesaugt, daß er eng am Zentralrohr 10 anliegt. Nach dem Einführen und dem Positionieren der Vorrichtung im Inneren des Mastes wird der Luftsack prall aufgeblasen. Hierdurch kommt er mit seiner Außenfläche mit der Innenwand des Mastes in Anlage und führt so zu einer relativ stabilen Positionierung der Vorrichtung.

In Figur 3 ist ein Teil eines Lichtmastes und eine vollständige Überwachungseinrichtung teilweise im Schnitt dargestellt. Sie umfaßt eine Spannvorrichtung 106 mit einer oberen Spanneinheit 130 und einer unteren Spanneinheit 150, eine Sensoreinheit 104 an ihrem unteren Ende und an ihrem oberen Ende eine Bewegungsvorrichtung 108 für die Sensoreinheit 104.

Im Gegensatz zu der in den Figuren 1 und 2 dargestellten Spannvorrichtung umfaßt die in Figur 3 dargestellte Spannvorrichtung 106 jeweils 4 Spannbacken 116 im oberen und 136 im unteren Bereich. Die Funktionsweise ist jedoch analog zu der in den Figuren 1 und 2 dargestellten Vorrichtung und wird daher hier nicht noch einmal im Detail beschrieben. Entsprechende Teile sind in Figur 3 mit den gleichen Bezugszeichen wie in den Figuren 1 und 2 zzgl. 100 versehen.

Im Zentralrohr 110 sind zwei Gleitlager 158 und 160 eingebracht, welche eine Zahnstangen-Hohlwelle 156 axial gleitend lagern. Am oberen Ende des Zentralrohrs 110 ist eine Antriebseinheit 152 eingebracht, über welche die Zahnstangen-Hohlwelle 156 in axialer Richtung verschoben werden kann. Am oberen Ende der ZahnstangenHohlwelle 156 ist eine Antriebseinheit 154 angebracht, durch welche eine Zentralwelle 176, welche in der Zahnstangen-Hohlwelle 156 geführt ist, um ihre Längsachse verdreht werden kann.

Am unteren Ende der Zentralwelle 176 ist die Sensoreinheit 104 angebracht. Sie umfaßt einen Doppelhub-Pneumatikzylinder 162 und zwei Ultraschall-Sensoren 164, welche jeweils an den Kolbenstangen des Doppelhub-Pneumatikzylinders 162 befestigt sind. Auf den der Innenwand 170 zugewandten Flächen der Ultraschall-Sensoren 164 sind Silikonauflagen 166 angebracht.

In Figur 3 sind außerdem Kabel 178 sichtbar, welche im Mastrohr geführt sind und die Leuchtmittel (nicht dargestellt) mit elektrischer Energie versorgen.

Die in Fig. 3 dargestellte Überwachungseinrichtung kann folgendermaßen betrieben werden:

Die Überwachungseinrichtung wird durch eine Öffnung 172 einer Wartungstüre eines Lichtmastes 168 eingeführt (die Spannbacken 116 und 136 sind noch "eingefahren"). Nach dem Einführen und dem Einschieben der Überwachungseinrichtung in eine gewünschte Position werden die Spannbacken 116 und 136 durch die Pneumatikzylinder 124 und 144 und die Gleitringe 122 und 142 radial nach außen verspreizt, bis sie die Überwachungseinrichtung gegen die Innenfläche 170 des Lichtmastes 168 verklemmen. Hierbei ist darauf zu achten, die Kabel 178 nicht zwischen den Spannbacken 16 und 36 und der Innenwand 170 einzuklemmen. Über die Antriebseinheiten 152 und 154 wird die Sensoreinheit 104 an die gewünschte Stelle im Lichtmast verfahren bzw. verdreht, vorzugsweise unterhalb der Erdoberfläche 174. Der maximale Drehwinkel ist hierbei möglicherweise durch die Kabel 170 begrenzt. Wenn die Sensoreinheit 104 die gewünschte Position erreicht hat, werden die Ultraschall-Sensoren 164 über den Doppelhub-Pneumatikzylinder 162 gegen die Innenfläche 170 des Lichtmastes 168 verfahren, bis die an der Außenseite der Ultraschallsensoren 174 angebrachte Silikonauflagen 166 in Anlage mit der Innenfläche 170 des Lichtmastes 168 sind.

Nach einer erfolgten Messung der Wandstärke des Lichtmastes können die Ultraschall-Sensoren 164 von dem Doppelhub-Pneumatikzylinder 162 von der Innenfläche 170 des Lichtmastes 168 zurückgefahren werden. Durch eine durch die Antriebseinheit 154 bewirkte Drehung der Zentralwelle 176 oder/und durch eine durch die Antriebseinheit 152 bewirkte axiale Verschiebung der Zahnstange-Hohlwelle 156 wird die Sensoreinheit 104 dann in eine neue Position gebracht. Durch erneute Betätigung des Doppelhub-Pneumatikzylinders 162 können die Ultraschall-Sensoren 164 und die Silikonauflagen 166 wieder mit einer Innenfläche 170 des Lichtmastes 168 in Anlage gebracht werden für eine erneute Messung.

Zumindest bei einer glatten Innenfläche 170 kann die Sensoreinheit 104 auch verfahren werden, solange sich die Sensoren 164 in Anlage mit der Innenwand 170 befinden.

In Figur 4 ist wiederum eine Überwachungseinrichtung 202 dargestellt, welche in das Rohr eines Lichtmastes 268 eingebracht ist. Sie umfaßt eine Spannvorrichtung 206 mit einer oberen Spanneinheit 230 und einer unteren Spanneinheit 250, die jeweils vier Spannbacken 216 und 236 aufweisen. Außerdem umfaßt sie eine Bewegungsvorrichtung 208 und eine Sensoreinheit 204. Entsprechende Teile in Figur 4 sind mit den gleichen Bezugszeichen wie in Figur 3 zzgl. 100 versehen. Die Funktionsweisen der Spannvorrichtung 206 und der Bewegungsvorrichtung 208 entsprechen denen von Figur 3 und sind hier nicht nochmals beschrieben. Die Unterschiede zu dem in Figur 3 dargestellten Ausführungsbeispiel betreffen die Vorrichtungen am unteren Ende der Zentralwelle 276.

Am unteren Ende der Zentralwelle 276 ist ein erster Doppelhub-Pneumatikzylinder 262 angebracht, an dessen Kolbenstange an den dem Zylinder entgegengesetzten Enden jeweils ein Ultraschall-Sensor 264 angeordnet ist. Unter dem ersten Doppelhub-Pneumatikzylinder 262 befindet sich ein zweiter Doppelhub-Pneumatikzylinder 280 mit einem Mikromotor, durch welchen die Kolbenstangen rotieren können. An den dem Zylinder 280 entgegengesetzten Enden der Kolbenstangen sind Bürsten 282 angebracht. Unter diesem zweiten Doppelhub-Pneumatikzylinder 280 befindet sich eine Hochdruck-Wasserstrahleinrichtung 284.

Die in Fig. 4 dargestellte Überwachungseinrichtung wird folgendermaßen betrieben:

Beim vorliegenden Ausführungsbeispiel wird auf Silikon-Auflagen an den Ultraschall-Sensoren 264 verzichtet. Statt dessen wird die Kopplung der Ultraschall-Sensoren 264 an die Innenfläche 270 des Lichtmastes 268 mittels Wasser erreicht. Um diese Kopplung möglichst intensiv und störungsfrei zu gestalten, wird die Meßstelle vor einer Messung gereinigt. Hierzu wird zuerst die Zahnstangen-Hohlwelle 256 über die Translations-Antriebseinheit 252 verschoben bzw. die Zentralwelle 276 über die Rotations-Antriebseinheit 254 so verdreht, daß die Hochdruck-Wasserstrahleinrichtung 284 im Bereich der gewünschten Meßstelle liegt. Diese wird dann aus den Düsen der Hochdruck-Wasserstrahleinrichtung 284 mit Wasser besprüht. Anschließend verfährt die Translations-Antriebseinheit 252 die Zahnstangen-Hohlwelle 256 nach unten, so daß die Bürsten 282 über dem Bereich der gewünschten und mit Wasser benetzten Meßstelle liegen. Über den Doppelhub-Pneumatikzylinder 280 werden die Bürsten 282 an der wasserbenetzten Meßstelle der Innenfläche 270 des Lichtmastes 268 in Anlage gebracht und mittels des Mikromotors in Drehung versetzt. Hierdurch kann die Meßstelle intensiv gereinigt werden. Nach dem Reinigungsvorgang wird die Hochdruck-Wasserstrahleinrichtung 284 nochmals über die gewünschte Meßstelle verfahren und spült mit einem kurzen Wasserstrahl noch verbliebene Verunreinigungen von der Meßstelle hinweg. Dann wird die Zahnstangen-Hohlwelle 256 bzw. die Zentralwelle 276 so verfahren, daß die Ultraschall-Sensoren 264 über dem Bereich der Meßstelle liegen. Diese werden dann durch den Doppelhub-Pneumatikzylinder 262 gegen die Innenwand 270 des Lichtmastes 268 verfahren, so daß die Messung durchgeführt werden kann.

Zur Verbesserung der Meßqualität können im Bereich des Ultraschall-Sensors weitere Wasseraustrittsöffnungen (nicht dargestellt) angebracht sein, über welche das die Ankopplung der Ultraschall-Sensoren 264 verbessernde Wasser zugeführt wird.

Außerdem können an den der Meßstelle zugewandten Flächen der Ultraschall-Sensoren 264 Adapterstücke (nicht dargestellt) angebracht werden, welche an ihren Außenflächen den lokalen Geometrien entsprechende Krümmungsradien aufweisen. Auch hierdurch wird einen bessere Ankopplung der Ultraschall-Sensoren 264 insbesondere bei konischen Mastgeometrien erreicht.

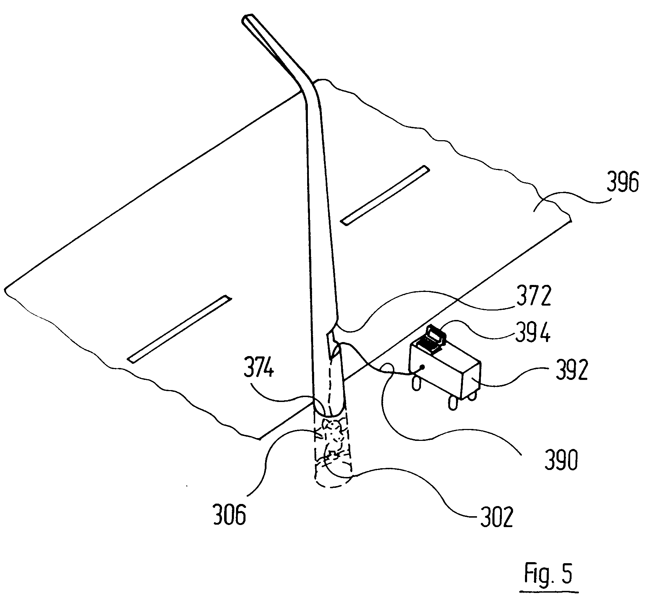

In Figur 5 ist die Überwachungseinrichtung der Figuren 3 oder 4 in ihrer Gesamtheit einschließlich der Betriebseinheit dargestellt.

Von der Überwachungseinrichtung 302, welche sich im Betrieb normalerweise unterhalb des Niveaus der Erdoberfläche 374 befindet, führen Versorgungs- und Meßleitungen 390 durch die Öffnung 372 der Wartungstüre des Lichtmastes 368 zu einer Betriebseinheit 392. Diese Betriebseinheit 392 dient unter anderem dazu, die Überwachungseinrichtung 302 z.B. mit elektrischer Energie, Druckluft und Wasser zu versorgen. An dieser Betriebseinheit 392 befindet sich auch die Steuerungs- und Auswerteeinheit 394, mit welcher z.B. die Spannvorrichtung 306 und die Bewegungsvorrichtungen 352 und 354 (in Fig. 5 nicht sichtbar) angesteuert werden.

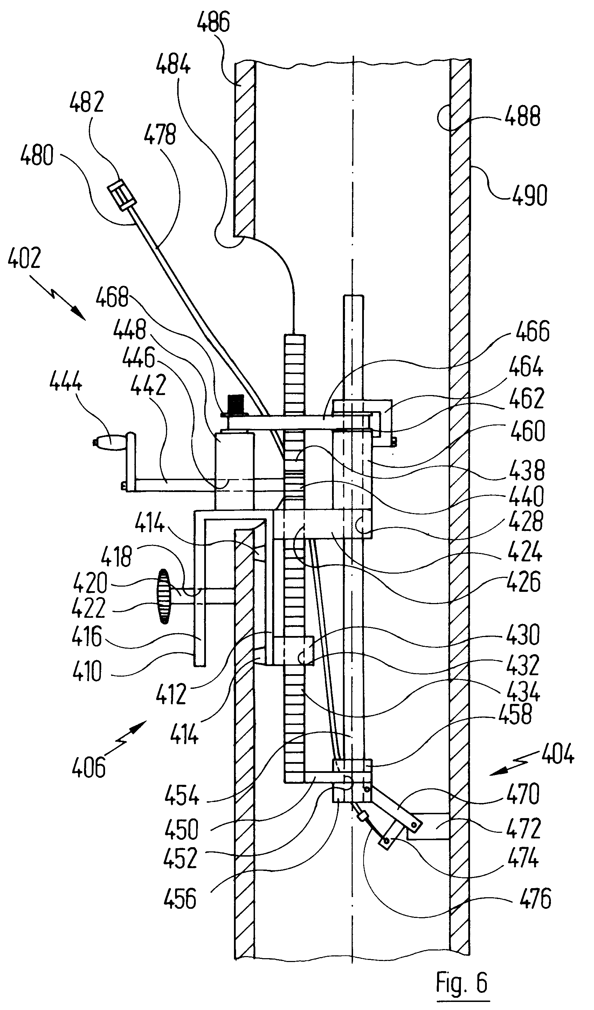

In Figur 6 ist ein drittes Ausführungsbespiel einer Einrichtung zur Überwachung der Korrosion auf einer Mantelfläche von Lichtmasten insgesamt mit dem Bezugszeichen 402 bezeichnet. Die Überwachungsvorrichtung 402 umfaßt unter anderem eine Sensoreinheit 404 und eine als Festlegevorrichtung dienende manuelle Klemmvorrichtung 406.

Die Klemmvorrichtung 406 besteht im wesentlichen aus einem U-förmigen Befestigungswinkel 410, wobei auf der Innenfläche des über eine Wartungsöffnung 484 in das Innere eines Mastes 486 eingebrachten einen Schenkels 412 des Befestigungswinkels 410 zwei Kontaktstücke 414 mit von der Seite gesehen trapezförmigem Querschnitt befestigt sind. In den anderen, bzgl. des Mastes 486 außenliegenden Schenkel 416 des Befestigungswinkels 410 ist senkrecht zum Schenkel 416 in etwa in der Mitte zwischen dessen oberem und dessen unterem Ende eine Gewindebohrung 418 eingebracht, in welche eine Klemmschraube 420 mit einem Drehgriff 422 eingeschraubt ist. Die genaue Vorgehensweise beim Festlegen der Klemmvorrichtung 406 ist weiter unten beschrieben.

Auf der Außenseite des sich im Mast 486 befindenden Schenkels 412 des Befestigungswinkels 410 ist ein sich horizontal von dem Schenkel 412 weg erstreckendes oberes Führungsteil 424 befestigt, in welches in dem dem Schenkel 412 benachbarten Bereich eine erste vertikale Bohrung 426 und im entfernteren Bereich eine in der Mittelachse des Mastes 486 angeordnete vertikale Führungsbohrung 428 eingebracht ist. Im Bereich des unteren Endes des einen Schenkels 412 ist auf dessen Außenfläche ein sich horizontal von ihm weg erstreckendes unteres Führungsteil 430 befestigt, in welches eine zweite vertikale Bohrung 432 mit gleicher Größe, gleichem Querschnitt und gleicher axialer Lage wie die erste Bohrung 426 eingebracht ist.

Durch die erste vertikale Bohrung 426 und die zweite vertikale Bohrung 432 ist eine Zahnstange 434 vertikal hindurchgeführt. Mit der Verzahnung 438 der Zahnstange 434 arbeitet ein Zahnrad 440 zusammen, welches von einer horizontalen, sich durch die Wartungsöffnung 484 nach außen erstreckenden Welle 442 getragen wird. An dem dem Zahnrad 440 entgegengesetzen, also außenliegenden Ende der Welle 442 ist eine Handkurbel 444 vorgesehen. Die Welle 442 ist in einer horizontalen Durchgangsbohrung 446 eines Lagerbocks 448 gelagert, welcher auf dem horizontalen, vom Mastäußeren ins Mastinnere reichenden Teil des Befestigungswinkels 410 angebracht ist. Wie weiter unten im Detail erläutert ist, dient die Zahnstange 434 der vertikalen Positionierung der Sensoreinheit 404.

Am unteren Ende der Zahnstange 434 ist eine sich horizontal von der Zahnstange 434 weg erstreckende Halteplatte 450 angebracht, in welcher eine vertikale Durchgangsbohrung 452 vorhanden ist. Die vertikale Durchgangsbohrung 452 ist axial auf die Führungsbohrung 428 auf der Mittelachse des Mastes 486 im oberen Führungsteil 424 ausgerichtet. Durch die Führungsbohrung 428 und die Durchgangsbohrung 452 ist eine Welle 454 hindurchgeführt. Am unteren Ende der Welle 454 ist unterhalb der Halteplatte 450 ein unterer Klemmring 456 und oberhalb der Halteplatte 450 ein oberer Klemmring 458 mit der Welle 454 verklemmt. Somit kann die Welle 454 sich zwar in der vertikalen Durchgangsbohrung 452 drehen, gegenüber der Halteplatte 450 jedoch nicht vertikal verschoben werden. Die Welle 454 dient der Bewegung in Umfangsrichtung der Sensoreinheit 404 (siehe unten).

Über der Führungsbohrung 428 ist um die Welle 454 herum eine Distanzhülse 460 am oberen Führungsteil 424 befestigt. Oberhalb der Distanzhülse 460 ist auf die Welle 454 ein erstes Zahnriemenrad 462 aufgeschoben. Die Welle 454 ist gegenüber dem Zahnriemenrad 462 vertikal verschieblich angeordnet, befindet sich jedoch über eine Längsnut (nicht dargestellt), in welche ein Vorsprung (nicht dargestellt) auf dem Zahnriemenrad 462 eingreift, im Dreheingriff mit diesem. Das Zahnriemenrad 462 wird durch einen Befestigungswinkel 464, welcher an der Distanzhülse 460 befestigt ist, nach oben hin unverschieblich gehalten.

Das Zahnriemenrad 462 arbeitet mit einem Zahnriemen 466 zusammen, welcher über einen Zahnriemen-Drehknopf 468 mit vertikaler Drehachse geführt ist. Der Zahnriemen-Drehknopf 468 ist in dem Lagerbock 448 drehbar gehalten.

Am unteren Klemmring 456, welcher am unteren Ende der Welle 454 unterhalb der Halteplatte 450 befestigt ist, ist ein Schwenkarm 470 in einer vertikalen Ebene schwenkbar gehalten. An dem dem unteren Klemmstück 456 entgegengesetzten Ende des Schwenkarmes 470 ist ein Ultraschallsensor 472 ebenfalls in einer vertikalen Ebene schwenkbar befestigt.

Am Schwenkarm 470 ist im Bereich des dem Ultraschallsensor 472 zugewandten Endes und senkrecht zur Längsachse des Schwenkarmes 470 ein Ansteuerungselement 474 angebracht. Das dem Schwenkarm 470 abgewandte Ende des Ansteuerungselementes 474 ist mit dem inneren verschieblichen Element 476 eines flexiblen Bowdenzuges 478 verbunden. Der Mantel 480 des flexiblen Bowdenzuges 478 ist mit seinem unteren Ende am unteren Klemmring 456 befestigt. Am oberen Ende des Bowdenzuges 478 ist ein Betätigungsknopf 482 angebracht. Durch diese Anordnung kann, wie weiter unten erläuert ist, die Sensoreinheit 404 verschwenkt werden.

Die Überwachungsvorrichtung 402 funktioniert folgendermaßen:

Der Befestigungswinkel 410 wird so über den unteren Rand der Wartungsöffnung 484 des Lichtmastes 486 gestülpt, daß die beiden Kontaktstücke 414 auf der Innenseite des einen Schenkels 412 an der inneren Mantelfläche 488 des Lichtmastes 486 anliegen. Über den Drehgriff 422 wird die Klemmschraube 420 so weit eingedreht, bis sie an der äußeren Mantelfläche 490 des Lichtmastes 486 fest anliegt und der Befestigungswinkel 410 somit an dem Lichtmast 486 fest verklemmt ist.

Über die Handkurbel 444, die Welle 442 und das Zahnrad 440 wird die Zahnstange 434 vertikal so weit verschoben, bis die Sensoreinheit 404 in etwa in der gewünschten Höhe im Lichtmast 486 liegt. Über eine Klemmvorrichtung (nicht dargestellt) kann die Welle 442 mit dem Lagerbock 448 verklemmt werden, so daß die vertikale Positionierung der Zahnstange 434 und damit auch der Sensoreinheit 404 nicht unbeabsichtigt verändert werden kann.

Sobald die Sensoreinheit 404 vertikal ausgerichtet ist, wird das innere Element 476 des flexiblen Bodenzuges 478 über den Betätigungsknopf 482 so bewegt, daß der Schwenkarm den Ultraschallsensor 472 bis in Anlage an die innere Mantelfläche 488 des Lichtmastes 486 verschwenkt. Nun kann die Messung durchgeführt werden. Während dieser wird der Zahnriemen-Drehknopf 468 gedreht, so daß über den Zahnriemen 466 und das Zahnriemenrad 462 die Welle 454 angetrieben und hierdurch der Ultraschall-Sensor 472 über die innere Mantelfläche 488 des Lichtmastes 486 bewegt wird. Der Durchmesser des Zahnriemen-Drehknopfes 468 ist vorzugsweise kleiner als der Durchmesser des Zahnriemenrades 462, so daß über die hierdurch geschaffene Untersetzung eine feinfühlige Einstellung der Bewegung der Sensoreinheit 404 möglich ist.

Die Überwachungseinrichtung 402 ist somit äußerst robust und einfach und kommt ohne komplizierte elektrische Teile zur Festlegung oder/und Bewegung des Sensors aus. Sie ist daher preisgünstig herstellbar und kann vor Ort leicht gewartet werden.

## Patentansprüche

1. Einrichtung zur Überwachung von Korrosion auf einer Mantelfläche von Lichtmasten, welche durch die Öffnung einer Wartungstüre in das Innere des Lichtmastes eingebracht werden kann und welche mit einer Betriebs- und Meßeinheit verbunden ist, dadurch gekennzeichnet, daß sie aufweist:
a) eine Vorrichtung (6; 106; 206; 406) zum Festlegen der Überwachungseinrichtung (102; 202; 302; 402) in einer gewünschten Position im Lichtmast (168; 268; 368; 486),
b) mindestens einen Sensor (164; 264; 472) zur Erfassung eines der lokalen Wandstärke des Lichtmastes (168; 268; 368; 486) entsprechenden Signals,
c) eine fernbedienbare Bewegungsvorrichtung (108; 208; 434, 454) für mindestens einen Sensor (164; 264; 472).

2. Überwachungseinrichtung nach Anspruch 1, dadurch gekennzeichnet, daß die Vorrichtung zum Festlegen der Überwachungseinrichtung (102; 202; 302) als fernbedienbare Spannvorrichtung (6; 106; 206; 306) ausgeführt ist, wobei diese zum Einführen der Überwachungseinrichtung (102; 202; 302) durch die Öffnung (172; 272; 372) einer Wartungstüre eines Lichtmastes (168; 268; 368) einklappbar ist und sich nach dem Einführen der Überwachungseinrichtung (102; 202; 302) so verspreizen läßt, daß sie mit der Innenwand (170; 270) des Lichtmastes (168; 268; 368) verspannt ist.

3. Überwachungseinrichtung nach Anspruch 1, dadurch gekennzeichnet, daß die Vorrichtung zum Festlegen der Überwachungseinrichtung (402) als schraubzwingenartiger Befestigungswinkel (410) ausgeführt ist.

4. Überwachungseinrichtung nach einem der vorhergehenden Ansprüche, dadurch gekennzeichnet, daß die Bewegungsvorrichtung (108; 208; 434) für den Sensor (164; 264; 472) so ausgeführt ist, daß sie den Sensor (164; 264; 472) axial in Mastrichtung bewegen kann.

5. Überwachungseinrichtung nach einem der vorhergehenden Ansprüche, dadurch gekennzeichnet, daß die Bewegungsvorrichtung (108; 208; 454) für den Sensor (164; 264; 472) so ausgeführt ist, daß sie den Sensor (164; 264; 472) um die Mittelachse des Lichtmastes (168; 268; 368; 486) verdrehen kann.

6. Überwachungseinrichtung nach einem der vorhergehenden Ansprüche, dadurch gekennzeichnet, daß eine Bewegungsvorrichtung (162; 262; 470) für den Sensor (164; 264; 472) vorgesehen ist, welche den Sensor (164; 264; 472) radial in Richtung der Innenwand (170; 270; 488) des Lichtmastes (168; 268; 368; 486) bis zur Anlage an diese verfahren kann.

7. Überwachungseinrichtung nach einem der vorherhegenden Ansprüche, dadurch gekennzeichnet, daß mindestens ein Sensor (164; 264; 472) ein Ultraschall-Sensor ist.

8. Überwachungseinrichtung nach Anspruch 7, dadurch gekennzeichnet, daß der Ultraschall-Sensor (164) mit einer Silikonauflage (166) versehen ist, so daß er trocken betrieben werden kann.

9. Überwachungseinrichtung nach einem der Ansprüche 7 oder 8, dadurch gekennzeichnet, daß eine Wasserversorgung (284) vorgesehen ist, so daß der Ultraschall-Sensor (264) naß betrieben werden kann.

10. Überwachungseinrichtung nach einem der Ansprüche 7 bis 9, dadurch gekennzeichnet, daß der Ultraschall-Sensor (164; 264) mit Adapterstücken an unterschiedliche Innenradien von Lichtmasten (168; 268; 368) angepaßt werden kann.

11. Überwachungseinrichtung nach einem der vorherhegenden Ansprüche, dadurch gekennzeichnet, daß die Bewegungsvorrichtung (108; 208) mindestens für die Rotationsbewegung einen Schrittmotor umfaßt.

12. Überwachungseinrichtung nach einem der vorherhegenden Ansprüche, dadurch gekennzeichnet, daß sie eine Reinigungsvorrichtung (282) zum Reinigen der Meßstelle umfaßt.

13. Überwachungseinrichtung nach einem der vorherhegenden Ansprüche, dadurch gekennzeichnet, daß die Festelegevorrichtung mindestens einen Ringschlauch umfaßt, welcher nach dem Einführen der Überwachungseinrichtung aufblasbar ist und so die Überwachungseinrichtung mit der Innenwand des Lichtmastes verspannt.

14. Überwachungseinrichtung nach einem der vorherhegenden Ansprüche, dadurch gekennzeichnet, daß die Spannvorrichtung und mit ihr die gesamte Überwachungseinrichtung mittels einer zweiten fernsteuerbaren Bewegungsvorrichtung in axialer Richtung des Lichtmastes verfahrbar ist.

15. Verfahren zur Überwachung von Korrosion auf einer Mantelfläche von Lichtmasten, dadurch gekennzeichnet, daß eine Verringerung der lokalen effektiven Wandstärke des Lichtmastes, welche durch Korrosion auf der inneren und/oder äußeren Mantelfläche hervorgerufen wird, vom Mastinneren her gemessen wird.
